# EUROPÄISCHE PATENTSCHRIFT

(11) **EP 3 910 656 B1**
(45) Veröffentlichungstag und Bekanntmachung des Hinweises auf die Patenterteilung: **07.06.2023**
(21) Anmeldenummer: 21159212.6
(22) Anmeldetag: 25.02.2021
(51) Int. Cl.: H01H 9/02, H01H 13/56, H02G 3/10, H02G 3/12, H02G 3/14

(54) **SCHALTERANORDNUNG**
SWITCH ASSEMBLY
AGENCEMENT DE COMMUTATEUR

(30) Priorität: 12.05.2020 AT 5010020 U
(43) Veröffentlichungstag der Anmeldung: 17.11.2021
(73) Patentinhaber: Sanube GmbH, 4776 Diersbach (AT)
(72) Erfinder: Sallaberger, Michael, 4782 St. Florian/Inn (AT)
(74) Vertreter: KLIMENT & HENHAPEL

(56) Entgegenhaltungen:
- WO-A1-2019/012459
- CH-A5- 695 715
- DE-A1-102015 109 579
- DE-C1- 4 309 355
- DE-U- 6 937 309
- US-A1- 2019 252 137
- US-B2- 9 167 660

## Beschreibung

Die Erfindung betrifft eine Schalteranordnung umfassend einen Funktionsteil mit einem eine Vorderseite und eine Rückseite aufweisenden Gehäuse, einem über die Vorderseite betätigbaren und einen elektrischen Kontakt auslösenden Schaltelement, einem mit dem Schaltelement verbundenen Verbindungskabel mit rückseitigem Kabelabgang, sowie mit Bohrungen zur Durchführung von Befestigungsmittel, wobei die Bohrungen in Vertiefungen des Gehäuses angeordnet sind, die an der Vorderseite des Gehäuses ausgebildet sind, gemäß dem Oberbegriff von Anspruch 1.

Schalteranordnungen mit Schalter der genannten Art werden etwa in Laderäumen von Nutzfahrzeugen an Innenwänden oder Aussenwänden oder anderen Plätzen an Fahrzeugen befestigt und dienen etwa dem Ein- und Ausschalten von Beleuchtungen oder anderen elektrischen Verbrauchern. Für ihre Befestigung an den Innenwänden von Laderäumen treten in der Praxis unterschiedliche Varianten auf. So können mitunter am Ort der Schaltermontage hinter den Innenwänden von Laderäumen vorhandene Hohlräume genutzt werden, die den rückseitigen Kabelabgang aufnehmen können. In diesem Fall kann eine gattungsgemäße Schalteranordnung einfach montiert werden, indem das Verbindungskabel mit seinen Verbindungsstellen zur Stromquelle und zum Verbraucher in den vorhandenen Hohlraum eingeführt wird und der Schalter mithilfe der Bohrungen zur Durchführung von Befestigungsmittel an der Innenwand des Laderaums befestigt wird. Falls solche Hohlräume zur Aufnahme rückseitiger Kabelabgänge nicht vorhanden sind, müssen andere Schalter verwendet werden, die über einen seitlichen Kabelabgang verfügen. Ein solcher Schalter wird ebenfalls mithilfe der Bohrungen zur Durchführung von Befestigungsmittel an der Innenwand des Laderaums befestigt, allerdings muss das Verbindungskabel in weiterer Folge an der dem Schalter zugewandten Seite der Innenwand entsprechend verlegt werden. Die beiden oben genannten Schalterausführungen werden auch als Aufbau-Versionen bezeichnet. Daneben gibt es auch Einbausituationen, in denen der Schalter versenkt verbaut werden muss. Hierfür sind wieder eigene Schalter vorgesehen, die eine den eigentlichen Schalterteil überragende Frontplatte vorsehen, die eine mit der Oberfläche der Ladewand im Wesentlichen bündige Befestigung an der Ladewand erlaubt. Entsprechende Schalterausführungen werden auch als Einbau-Versionen bezeichnet.

Die unterschiedlichen Verbaumöglichkeiten erfordern somit unterschiedliche Schaltertypen, wodurch ein entsprechend hoher Aufwand an Fertigung und Lagerhaltung verursacht wird.

US 9 167 660 B2 offenbart eine Schalteranordnung.

Es besteht daher das Ziel der Erfindung daran eine Schalteranordnung zu verwirklichen, die diesen Aufwand an Fertigung und Lagerhaltung sowie die damit verbundenen Kosten verringert.

Dieses Ziel wird durch die Merkmale von Anspruch 1 erreicht. Anspruch 1 bezieht sich auf eine Schalteranordnung umfassend einen Funktionsteil mit einem eine Vorderseite und eine Rückseite aufweisenden Gehäuse, einem über die Vorderseite betätigbaren und einen elektrischen Kontakt auslösenden Schaltelement, einem mit dem Schaltelement verbundenen Verbindungskabel mit rückseitigem Kabelabgang, sowie mit Bohrungen zur Durchführung von Befestigungsmittel, wobei die Bohrungen in Vertiefungen des Gehäuses angeordnet sind, die an der Vorderseite des Gehäuses ausgebildet sind. Erfindungsgemäß wird hierfür vorgeschlagen, dass ein auf die Vorderseite des Gehäuses des Funktionsteils aufsteckbarer Abdeckrahmen vorgesehen ist, der mit Abdeckrahmenbohrungen zur Durchführung von Befestigungsmittel sowie mit Steckvorsprüngen versehen ist, wobei die Steckvorsprünge in die Vertiefungen des Gehäuses des Funktionsteils zumindest abschnittsweise formschlüssig einsteckbar sind und die Abdeckrahmenbohrungen in das Gehäuse des Funktionsteils überragenden Abschnitten des aufgesteckten Abdeckrahmens angeordnet sind, sowie ein Sockelteil vorgesehen ist, der mit Sockelteilbohrungen versehen ist, die bei Anlage des Sockelteils an der Rückseite des Gehäuses des Funktionsteils mit den Bohrungen des Funktionsteils zur Durchführung der Befestigungsmittel fluchten, wobei der Sockelteil eine zentral angeordnete Aufnahme für das Verbindungskabel des Funktionsteils sowie eine die zentrale Aufnahme mit einer Seitenfläche des Sockelteils verbindende Kabelführungsnut für einen seitlichen Kabelabgang des Verbindungskabels aufweist, und der Funktionsteil wahlweise mit dem Abdeckrahmen und/oder dem Sockelteil kombinierbar ist.

Die erfindungsgemäße Schalteranordnung sieht somit nur mehr eine einzige Ausführung des Funktionsteils mit dem Schaltelement und dem Verbindungskabel vor. Die Flexibilität hinsichtlich unterschiedlicher Verbaumöglichkeiten wird mithilfe des Abdeckrahmens und des Sockelteils erreicht, die einfach und kostengünstig zu produzierende Adapterteile darstellen. Falls am Ort der Schaltermontage vorhandene Hohlräume im Zuge einer Aufbau-Situation genutzt werden können, kann der Funktionsteil ohne Verwendung des Sockelteils oder des Abdeckrahmens montiert werden, wobei der vorhandene Hohlraum den rückseitigen Kabelabgang aufnehmen kann. Falls solche Hohlräume zur Aufnahme rückseitiger Kabelabgänge nicht vorhanden sind, kann zusätzlich der Sockelteil verwendet werden. Der Sockelteil ist erfindungsgemäß mit Sockelteilbohrungen versehen, die bei Anlage des Sockelteils an der Rückseite des Gehäuses des Funktionsteils mit den Bohrungen des Funktionsteils zur Durchführung der Befestigungsmittel fluchten, sodass der Sockelteil gemeinsam mit dem Funktionsteil befestigt werden kann. Zudem weist der Sockelteil eine zentral angeordnete Aufnahme für das Verbindungkabel des Funktionsteils sowie eine die zentrale Aufnahme mit einer Seitenfläche des Sockelteiles verbindende Kabelführungsnut für einen seitlichen Kabelabgang des Verbindungskabels auf. Das Verbindungskabel kann dabei im Zuge der Montage von Funktionsteil und Sockelteil durch die Aufnahme gefädelt und in die Kabelführungsnut eingelegt werden, bevor der Funktionsteil und der Sockelteil gemeinsam montiert werden. Der Sockelteil nimmt somit den rückseitigen Kabelabgang des Funktionsteils auf und lenkt ihn in einen seitlichen Kabelabgang um. Mit der Bezeichnung "seitlich" ist dabei auch "nach oben" oder "nach unten" umfasst. Die durch Funktionsteil und Sockelteil gebildete Schalteranordnung kann in weiterer Folge mithilfe der am Funktionsteil vorgesehenen Bohrungen sowie der Sockelteilbohrungen zur Durchführung von Befestigungsmittel beispielsweise an der Wand eines Laderaums befestigt werden. Das Verbindungskabel kann in weiterer Folge an der dem Schalter zugewandten Seite der Wand entsprechend verlegt werden.

Für Einbausituationen, in denen der Schalter versenkt verbaut werden muss, kann zusätzlich der Abdeckrahmen verwendet werden, der auf die Vorderseite des Gehäuses des Funktionsteils aufsteckbar ist. Der Abdeckrahmen ist mit Abdeckrahmenbohrungen zur Durchführung von Befestigungsmittel sowie mit Steckvorsprüngen versehen, wobei die Abdeckrahmenbohrungen in das Gehäuse des Funktionsteils überragenden Abschnitten des Abdeckrahmens angeordnet sind und die Steckvorsprünge in die Vertiefungen des Gehäuses des Funktionsteils zumindest abschnittsweise formschlüssig einsteckbar sind. Somit kann einerseits der Funktionsteil am Abdeckrahmen befestigt werden, und in weiterer Folge die Schalteranordnung mithilfe der Abdeckrahmenbohrungen beispielsweise an der Wand eines Laderaums, wodurch eine mit der Oberfläche der Wand im Wesentlichen bündige Befestigung möglich ist. Der Abdeckrahmen bedeckt dabei die Einbaufuge zwischen dem versenkt eingesetzten Funktionsteil und der Wand des Laderaums, wobei der Abdeckrahmen die Bedienbarkeit des Schaltelements freilich unbeeinträchtigt lässt.

Somit können durch alleinige Verwendung des Funktionsteils oder durch das Kombinieren des Funktionsteils mit dem Sockelteil oder dem Abdeckrahmen Schalteranordnungen für unterschiedliche Verbaumöglichkeiten verwirklicht werden, ohne dass es hierfür unterschiedlicher Schalter bedarf. Da außerdem die für die Befestigung vorgesehenen Vertiefungen des Funktionsteils auch für die Steckverbindung des Abdeckrahmens verwendet werden, muss der Funktionsteil in seiner baulichen Ausführung nicht verändert werden und weist bei seiner Verwendung ohne Abdeckrahmen auch keine optische Beeinträchtigung durch nicht genutzte Bohrungen oder Steckaufnahmen auf.

Freilich sind auch Montagesituationen denkbar, bei denen es vorteilhaft sein kann, sowohl den Abdeckrahmen als auch den Sockelteil zu verwenden.

Hinsichtlich der Aufnahme des Sockelteils wird vorgeschlagen, dass die zentrale Aufnahme als Durchbruch durch den Sockelteil ausgeführt ist. Diese Maßnahme reduziert einerseits die Aufbauhöhe des Sockelteils und somit der Schalteranordnung, und ermöglicht auch im Bedarfsfall einen rückseitigen Kabelabgang.

Zudem wird vorgeschlagen, dass der Sockelteil bei Anlage an der Rückseite des Gehäuses des Funktionsteils in seinen äußeren Abmessungen senkrecht zur Anlagerichtung den äußeren Abmessungen des Gehäuses des Funktionsteils entspricht. Auf diese Weise ist die Zweiteilung der Schalteranordnung bestehend aus Funktionsteil und Sockelteil optisch kaum mehr erkennbar, und es ergibt sich eine kompakte Schalteranordnung.

Das Schaltelement ist vorzugsweise als Druckschalter mit einer druckempfindlichen Piezo-Membran ausgeführt. Auf diese Weise kann die Aufbauhöhe der Schalteranordnung verringert werden. Der Abdeckrahmen ist freilich so ausgeführt, dass er das Schaltelement in seiner Bedienbarkeit nicht beeinträchtigt, indem er einen entsprechenden Durchbruch aufweist, sodass der aufgesteckte Abdeckrahmen das Schaltelement nicht abdeckt.

Des Weiteren wird vorgeschlagen, dass an der Vorderseite des Gehäuses eine den Kontaktierungszustand der Schalteranordnung anzeigende LED-Anzeige angeordnet ist, und der Abdeckrahmen eine bei aufgestecktem Abdeckrahmen mit der LED-Anzeige fluchtende Öffnung aufweist. Somit wird auch die LED-Anzeige in ihrer Funktion nicht beeinträchtigt, da der aufgesteckte Abdeckrahmen die LED-Anzeige nicht abdeckt.

Die Erfindung wird in weiterer Folge anhand von Ausführungsbeispielen mithilfe der beiliegenden Zeichnungen näher erläutert. Es zeigen hierbei die
Fig. 1 eine perspektivische Ansicht einer Ausführungsform des Funktionsteils,
Fig. 2a eine Vorderansicht des Funktionsteils gemäß Fig. 1,
Fig. 2b eine seitliche Ansicht des Funktionsteils gemäß Fig. 1,
Fig. 2c eine Unteransicht des Funktionsteils der Fig. 1,
Fig. 3a eine perspektivische Ansicht einer Ausführungsform des Sockelteils,
Fig. 3b eine weitere perspektivische Ansicht des Sockelteils gemäß Fig. 3a,
Fig. 4a eine Vorderansicht der für die Anlage am Funktionsteil gedachten Seite des Sockelteils gemäß Fig. 3a,
Fig. 4b eine seitliche Ansicht des Sockelteils gemäß Fig. 4a,
Fig. 4c eine Unteransicht des Sockelteils der Fig. 4a,
Fig. 4d eine Vorderansicht der der Anlage am Funktionsteil abgewandten Seite des Sockelteils gemäß Fig. 3b,
Fig. 5a eine perspektivische Ansicht der Vorderseite einer Ausführungsform des Abdeckrahmens,
Fig. 5b eine perspektivische Ansicht der Rückseite des Abdeckrahmens gemäß Fig. 5a,
Fig. 6a eine Vorderansicht des Abdeckrahmens gemäß Fig. 5,
Fig. 6b eine seitliche Ansicht des Abdeckrahmens gemäß Fig. 5,
Fig. 6c eine Unteransicht des Abdeckrahmens der Fig. 5,
Fig. 6d eine Rückansicht des Abdeckrahmens gemäß Fig. 5,
Fig. 7a eine Vorderansicht einer Schalteranordnung bestehend aus Funktionsteil gemäß Fig. 1 und aufgestecktem Abdeckrahmen gemäß Fig. 5,
Fig. 7b eine seitliche Ansicht der Schalteranordnung gemäß Fig. 7a,
Fig. 7c eine Unteransicht der Schalteranordnung gemäß Fig. 7a,
Fig. 7d eine Oberansicht der Schalteranordnung gemäß Fig. 7a,
Fig. 8a eine perspektivische Ansicht einer Schalteranordnung bestehend aus Funktionsteil gemäß Fig. 1 und Sockelteil gemäß Fig. 3,
Fig. 8b eine weitere perspektivische Ansicht der Schalteranordnung gemäß Fig. 8a,
Fig. 9a eine Vorderansicht der Schalteranordnung gemäß Fig. 8,
Fig. 9b eine seitliche Ansicht der Schalteranordnung gemäß Fig. 8, und die
Fig. 9c eine Unteransicht der Schalteranordnung gemäß Fig. 8.

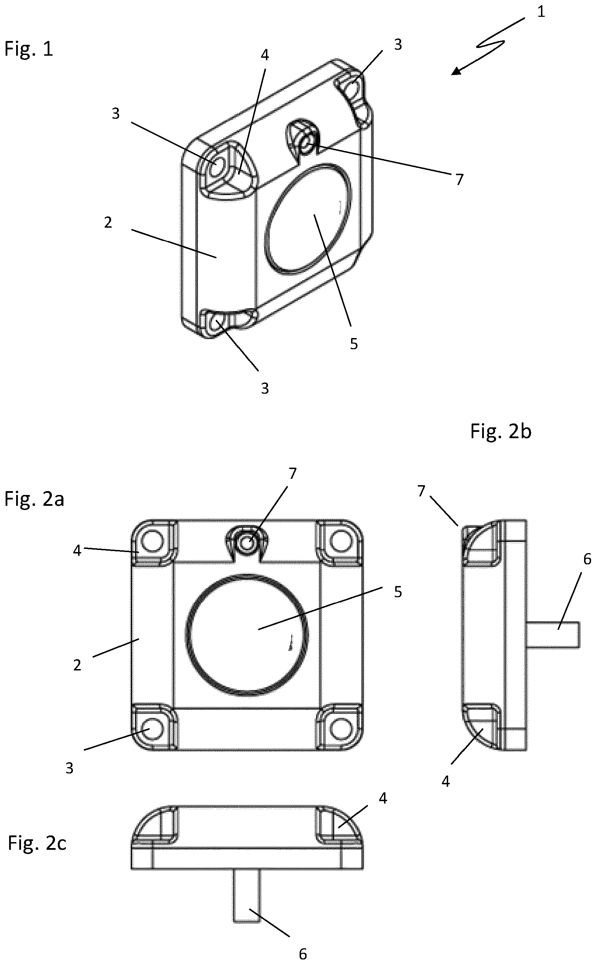

Zunächst wird auf die Fig. 1 und 2 Bezug genommen, die eine Ausführungsform des Funktionsteils 1 zeigen. Der Funktionsteil 1 weist ein Gehäuse 2 auf und kann mittels Bohrungen 3 zur Durchführung von Befestigungsmittel beispielsweise an der Wand eines Laderaums montiert werden. Die Bohrungen 3 sind in Vertiefungen 4 des Gehäuses 2 angeordnet, die an der Vorderseite des Gehäuses 2 ausgebildet sind. Der Funktionsteil 1 weist ferner ein über die Vorderseite betätigbares und einen elektrischen Kontakt auslösendes Schaltelement 5 auf, das im gezeigten Ausführungsbeispiel als Druckschalter mit einer druckempfindlichen Piezo-Membran ausgeführt ist. Das Schaltelement 5 ist mit einem Verbindungskabel 6 mit rückseitigem Kabelabgang verbunden, wie in der Fig. 2b ersichtlich ist. Das Verbindungskabel 6 beinhaltet die Kabelführungen zur Erstellung eines elektrischen Kontakts mit einer Stromquelle, sowie mit einem elektrischen Verbraucher, beispielsweise einer Beleuchtung für den Laderaum eines Nutzfahrzeuges. Mithilfe des Schaltelements 5 kann dabei der elektrische Verbraucher mit der Stromquelle verbunden oder von ihr getrennt werden. Der Funktionsteil 1 ist ferner mit einer LED-Anzeige 7 versehen, die den Kontaktierungszustand anzeigt, also ob beispielsweise eine Beleuchtung eingeschaltet ist oder nicht.

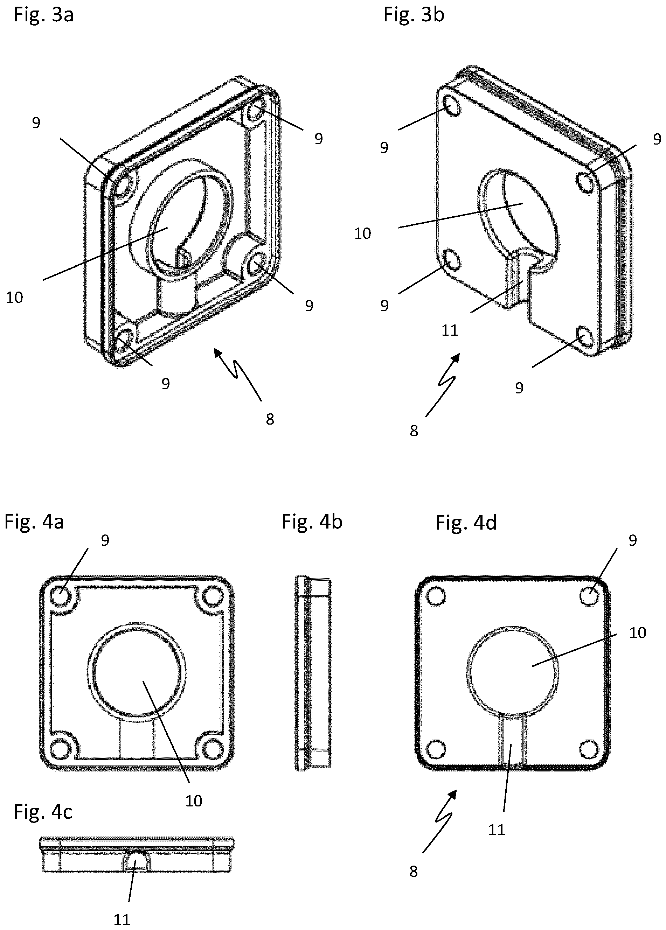

Die Fig. 3 und 4 zeigen eine Ausführungsform des Sockelteils 8. Der Sockelteil 8 ist mit Sockelteilbohrungen 9 versehen, die bei Anlage des Sockelteils 8 an der Rückseite des Gehäuses 2 des Funktionsteils 1 mit den Bohrungen 3 des Funktionsteils 1 zur Durchführung der Befestigungsmittel fluchten. Die Sockelteilbohrungen 9 entsprechen somit in Anzahl und Platzierung der Anzahl und der Platzierung der Bohrungen 3 des Funktionsteils 1. In der gezeigten Ausführungsform sind vier Sockelteilbohrungen 9 vorgesehen, die jeweils in den Eckbereichen des Sockelteils 8 angeordnet sind. Der Sockelteil 8 weist ferner eine zentral angeordnete Aufnahme 10 für das Verbindungkabel 6 des Funktionsteils 1 sowie eine die zentrale Aufnahme 10 mit einer Seitenfläche des Sockelteiles 8 verbindende Kabelführungsnut 11 für einen seitlichen

Kabelabgang des Verbindungskabels 6 auf. Die zentrale Aufnahme 10 ist dabei als Durchbruch durch den Sockelteil 8 ausgeführt. Der Sockelteil 8 ist ferner so ausgeführt, dass er bei Anlage an der Rückseite des Gehäuses 2 des Funktionsteils 1 in seinen äußeren Abmessungen senkrecht zur Anlagerichtung den äußeren Abmessungen des Gehäuses 2 des Funktionsteils 1 entspricht. Falls der Sockelteil 8 somit mit dem Funktionsteil 1 kombiniert wird, ist die Zweiteilung der Schalteranordnung bestehend aus Funktionsteil 1 und Sockelteil 8 optisch kaum mehr erkennbar, und es ergibt sich eine kompakte Schalteranordnung.

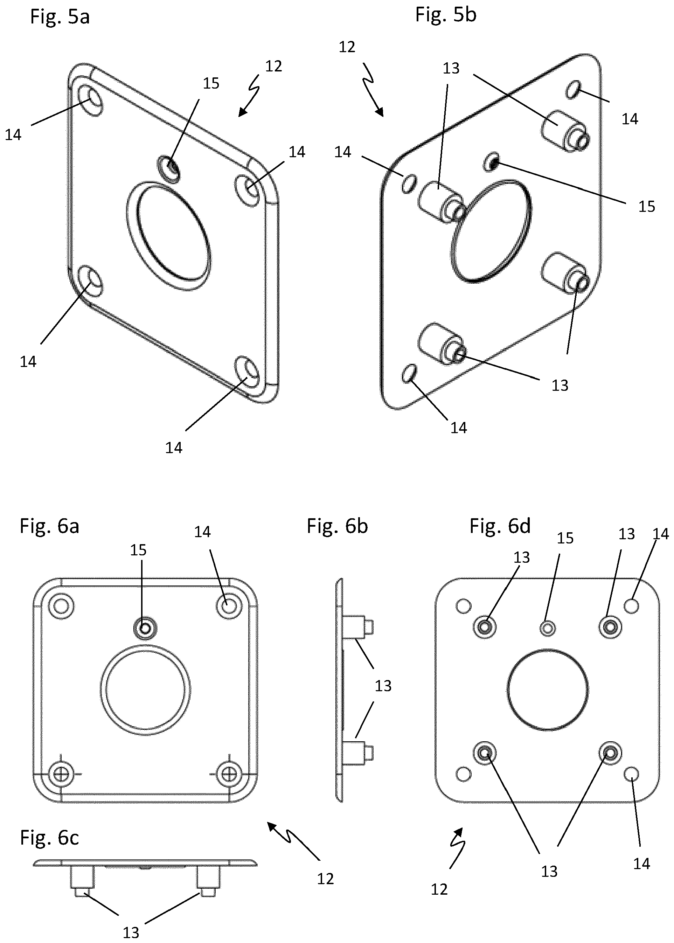

Die Fig. 5 und 6 zeigen eine Ausführungsform des Abdeckrahmens 12. Der Abdeckrahmen 12 ist so ausgeführt, dass er auf die Vorderseite des Gehäuses 2 des Funktionsteils 1 aufsteckbar ist. Hierfür ist er mit Steckvorsprüngen 13 versehen, die in die Vertiefungen 4 des Gehäuses 2 des Funktionsteils 1 zumindest abschnittsweise formschlüssig einsteckbar sind. Der Abdeckrahmen 12 ist ferner mit Abdeckrahmenbohrungen 14 zur Durchführung von Befestigungsmittel versehen, wobei die Abdeckrahmenbohrungen 14 in das Gehäuse 2 des Funktionsteils 1 überragenden Abschnitten des Abdeckrahmens 12 angeordnet sind.

In der gezeigten Ausführungsform sind vier Abdeckrahmenbohrungen 14 vorgesehen, die jeweils in den Eckbereichen des Abdeckrahmens 12 angeordnet sind. Der Abdeckrahmen 14 weist zudem eine Öffnung 15 auf, die bei aufgestecktem Abdeckrahmen 12 mit der LED-Anzeige 7 des Funktionsteils 1 fluchtet, sodass die LED-Anzeige 7 auch bei aufgestecktem Abdeckrahmen 12 sichtbar bleibt. Der Abdeckrahmen 14 ist freilich so ausgeführt, dass er das Schaltelement 5 in seiner Bedienbarkeit nicht beeinträchtigt, falls der Abdeckrahmen 14 auf den Funktionsteil 1 aufgesteckt wurde, indem er einen entsprechenden Durchbruch aufweist, sodass der aufgesteckte Abdeckrahmen 14 das Schaltelement 5 nicht abdeckt.

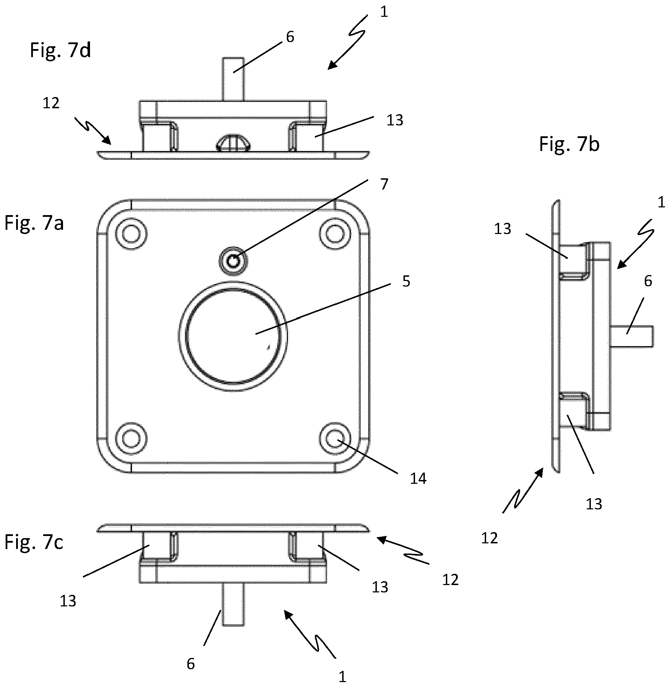

Anhand der Fig. 7 wird eine erste Schalteranordnung gezeigt, die aus dem Funktionsteil 1 gemäß Fig. 1 und dem Abdeckrahmen 12 gemäß Fig. 5 gebildet wird. Der Abdeckrahmen 12 wurde dabei auf den Funktionsteil 1 aufgesteckt, indem die Steckvorsprünge 13 in die Vertiefungen 4 des Gehäuses 2 des Funktionsteils 1 eingesteckt wurden. Der Abdeckrahmen 12 bedeckt somit die Vorderseite des Funktionsteils, wobei aber das Schaltelement 5 weiterhin frei liegt und somit betätigt werden kann, und die LED-Anzeige 7 mithilfe der Öffnung 15 weiterhin sichtbar bleibt. Der Funktionsteil 1 wurde somit am Abdeckrahmen 12 befestigt, der in weiterer Folge mithilfe der Abdeckrahmenbohrungen 14 beispielsweise an der Wand eines Laderaumes befestigt werden kann. Der Kabelabgang des Verbindungskabels 6 verbleibt dabei weiterhin mittig der Rückseite des Funktionsteils 1.

Diese Schalteranordnung eignet sich für Einbausituationen, in denen der Schalter versenkt verbaut werden muss. Der Abdeckrahmen 12 bedeckt dabei die Einbaufuge zwischen dem versenkt eingesetzten Funktionsteil 1 und der Wand des Laderaums, wobei der Abdeckrahmen 12 die Bedienbarkeit des Schaltelements 5 unbeeinträchtigt lässt.

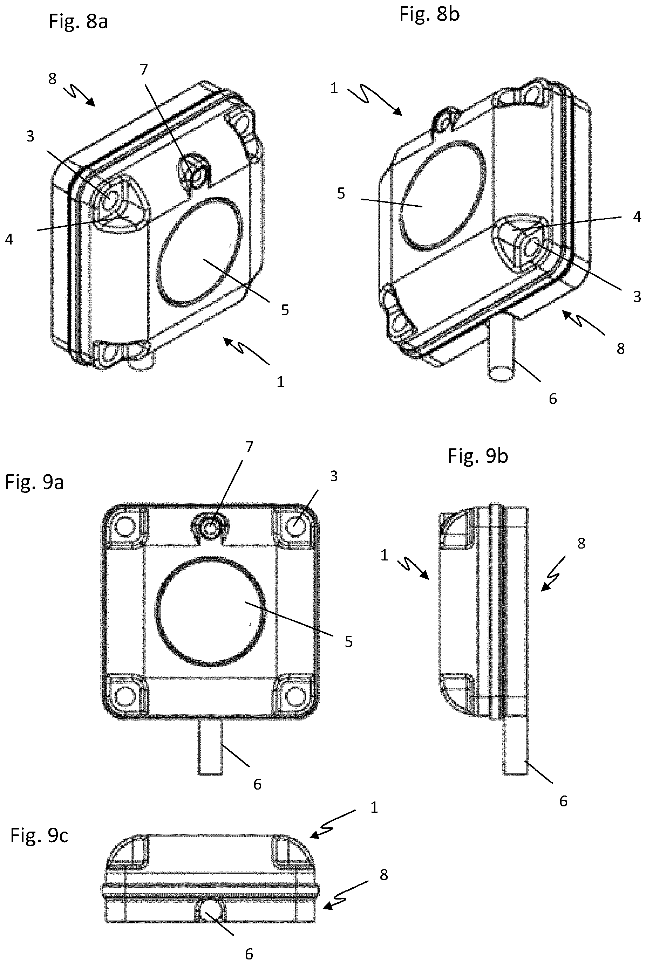

Anhand der Fig. 8 und 9 wird eine weitere Schalteranordnung gezeigt, die aus dem Funktionsteil 1 gemäß Fig. 1 und dem Sockelteil 8 gemäß Fig. 3 und 4 gebildet wird. Dabei ist zunächst ersichtlich, dass der Sockelteil 8 so ausgeführt ist, dass er bei Anlage an der Rückseite des Gehäuses 2 des Funktionsteils 1 in seinen äußeren Abmessungen senkrecht zur Anlagerichtung den äußeren Abmessungen des Gehäuses 2 des Funktionsteils 1 entspricht. Falls der Sockelteil 8 somit mit dem Funktionsteil 1 kombiniert wird, ist die Zweiteilung der Schalteranordnung bestehend aus Funktionsteil 1 und Sockelteil 8 optisch kaum mehr erkennbar, und es ergibt sich eine kompakte Schalteranordnung. Des Weiteren ist ersichtlich, dass der rückseitige Kabelabgang des Funktionsteils 1 mithilfe des Sockelteils 8 in einen seitlichen Kabelabgang umgelenkt wird. Diese Schalteranordnung eignet sich für Montagesituationen, in denen keine rückseitigen Hohlräume zur Aufnahme rückseitiger Kabelabgänge vorhanden sind. Der Sockelteil 8 kann hierfür an die Rückseite des Funktionsteils 1 angelegt werden, wobei die Sockelteilbohrungen 9 in fluchtende Anlage mit den Bohrungen 3 des Funktionsteils 1 gelangen. Der Sockelteil 8 und der Funktionsteil 1 können somit aneinander sowie gemeinsam beispielsweise an der Wand eines Laderaums befestigt werden. Das Verbindungskabel 6 kann dabei im Zuge der Montage von Funktionsteil 1 und Sockelteil 8 durch die Aufnahme 10 des Sockelteils 8 gefädelt und in die Kabelführungsnut 11 eingelegt werden, bevor der Funktionsteil 1 und der Sockelteil 8 gemeinsam montiert werden. Der Sockelteil 8 nimmt somit den rückseitigen Kabelabgang des Funktionsteils 1 auf und lenkt ihn in einen seitlichen Kabelabgang um. Die durch Funktionsteil 1 und Sockelteil 8 gebildete Schalteranordnung kann in weiterer Folge mithilfe der am Funktionsteil 1 vorgesehenen Bohrungen 3 sowie der Sockelteilbohrungen 9 zur Durchführung von Befestigungsmittel beispielsweise an der Wand eines Laderaums befestigt werden. Das Verbindungskabel 6 kann in weiterer Folge an der der Schalteranordnung zugewandten Seite der Wand entsprechend verlegt werden.

Freilich sind auch Montagesituationen denkbar, bei denen es vorteilhaft sein kann, sowohl den Abdeckrahmen 12 als auch den Sockelteil 8 zu verwenden.

Die erfindungsgemäße Schalteranordnung sieht somit nur mehr eine einzige Ausführung des Funktionsteils 1 mit dem Schaltelement 5 und dem Verbindungskabel 6 vor. Die Flexibilität hinsichtlich unterschiedlicher Verbaumöglichkeiten wird mithilfe des Abdeckrahmens 12 und des Sockelteils 8 erreicht, die einfach und kostengünstig zu produzierende Adapterteile darstellen. Die erfindungsgemäße Schalteranordnung mit den frei wählbaren Kombinationen des Funktionsteils 1 mit dem Abdeckrahmen 12 und/oder dem Sockelteil 8 ermöglicht somit unterschiedliche Verbaumöglichkeiten und verringert dennoch den Aufwand an Fertigung und Lagerhaltung sowie die damit verbundenen Kosten.

## Patentansprüche

1. Schalteranordnung umfassend einen Funktionsteil (1) mit einem eine Vorderseite und eine Rückseite aufweisenden Gehäuse (2), einem über die Vorderseite betätigbaren und einen elektrischen Kontakt auslösenden Schaltelement (5), einem mit dem Schaltelement (5) verbundenen Verbindungskabel (6) mit rückseitigem Kabelabgang, sowie mit Bohrungen (3) zur Durchführung von Befestigungsmittel, wobei die Bohrungen (3) in Vertiefungen (4) des Gehäuses (2) angeordnet sind, die an der Vorderseite des Gehäuses (2) ausgebildet sind, **dadurch gekennzeichnet, dass** ein auf die Vorderseite des Gehäuses (2) des Funktionsteils (1) aufsteckbarer Abdeckrahmen (12) vorgesehen ist, der mit Abdeckrahmenbohrungen (14) zur Durchführung von Befestigungsmittel sowie mit Steckvorsprüngen (13) versehen ist, wobei die Steckvorsprünge (13) in die Vertiefungen (4) des Gehäuses (2) des Funktionsteils (1) zumindest abschnittsweise formschlüssig einsteckbar sind und die Abdeckrahmenbohrungen (14) in das Gehäuse (2) des Funktionsteils (1) überragenden Abschnitten des aufgesteckten Abdeckrahmens (12) angeordnet sind, sowie ein Sockelteil (8) vorgesehen ist, der mit Sockelteilbohrungen (9) versehen ist, die bei Anlage des Sockelteils (8) an der Rückseite des Gehäuses (2) des Funktionsteils (1) mit den Bohrungen (3) des Funktionsteils (1) zur Durchführung der Befestigungsmittel fluchten, wobei der Sockelteil (8) eine zentral angeordnete Aufnahme (10) für das Verbindungskabel (6) des Funktionsteils (1) sowie eine die zentrale Aufnahme (10) mit einer Seitenfläche des Sockelteils (8) verbindende Kabelführungsnut (11) für einen seitlichen Kabelabgang des Verbindungskabels (6) aufweist, und der Funktionsteil (1) wahlweise mit dem Abdeckrahmen (12) und/oder dem Sockelteil (8) kombinierbar ist.

2. Schalteranordnung nach Anspruch 1, **dadurch gekennzeichnet, dass** die zentrale Aufnahme (10) als Durchbruch durch den Sockelteil (8) ausgeführt ist.

3. Schalteranordnung nach Anspruch 1 oder 2, **dadurch gekennzeichnet, dass** der Sockelteil (8) bei Anlage an der Rückseite des Gehäuses (2) des Funktionsteils (1) in seinen äußeren Abmessungen senkrecht zur Anlagerichtung den äußeren Abmessungen des Gehäuses (2) des Funktionsteils (1) entspricht.

4. Schalteranordnung nach einem der Ansprüche 1 bis 3, **dadurch gekennzeichnet, dass** das Schaltelement (5) als Druckschalter mit einer druckempfindlichen Piezo-Membran ausgeführt ist.

5. Schalteranordnung nach einem der Ansprüche 1 bis 4, **dadurch gekennzeichnet, dass** an der Vorderseite des Gehäuses (2) eine den Kontaktierungszustand der Schalteranordnung anzeigende LED-Anzeige (7) angeordnet ist, und der Abdeckrahmen (12) eine bei aufgestecktem Abdeckrahmen (12) mit der LED-Anzeige (7) fluchtende Öffnung (15) aufweist.

## Claims

1. Switch assembly comprising a functional part (1) with a housing (2) having a front side and a rear side, a switching element (5) which can be actuated via the front side and triggers an electrical contact, a connecting cable (6) which is connected to the switching element (5) and has a cable outlet on the rear side, as well as with bores (3) for the passage of fastening means, wherein the bores (3) are arranged in depressions (4) of the housing (2) which are formed on the front side of the housing (2), **characterized in that** a cover frame (12) which can be plugged onto the front side of the housing (2) of the functional part (1) is provided, which cover frame (12) is provided with cover frame bores (14) for the passage of fastening means as well as with plug-in projections (13), wherein the plug-in projections (13) can be plugged into the depressions (4) of the housing (2) of the functional part (1) in a form-fitting manner at least in sections, and the cover frame bores (14) are arranged in sections of the plugged-on cover frame (12) projecting beyond the housing (2) of the functional part (1), as well as a base part (8) is provided which is provided with base part bores (9) which, when the base part (8) rests against the rear side of the housing (2) of the functional part (1), are aligned with the bores (3) of the functional part (1) for the passage of the fastening means, wherein the base part (8) has a centrally arranged receptacle (10) for the connecting cable (6) of the functional part (1) as well as a cable guide groove (11) connecting the central receptacle (10) to a side surface of the base part (8) for a lateral cable outlet of the connecting cable (6), and the functional part (1) can be optionally combined with the cover frame (12) and/or the base part (8).

2. Switch assembly according to claim 1, **characterized in that** the central receptacle (10) is designed as an opening through the base part (8).

3. Switch assembly according to claim 1 or 2, **characterized in that** the base part (8), when resting against the rear side of the housing (2) of the functional part (1), corresponds in its outer dimensions perpendicular to the bearing direction to the outer dimensions of the housing (2) of the functional part (1).

4. Switch assembly according to one of claims 1 to 3, **characterized in that** the switching element (5) is designed as a pressure switch with a pressure-sensitive piezo diaphragm.

5. Switch assembly according to one of claims 1 to 4, **characterized in that** an LED display (7) indicating the contacting state of the switch assembly is arranged on the front side of the housing (2), and the cover frame (12) has an opening (15) which is aligned with the LED display (7) when the cover frame (12) is plugged on.

## Revendications

1. Dispositif de commutateur comprenant une partie fonctionnelle (1) avec un boîtier (2) présentant une face avant et une face arrière, avec un élément de commutation (5) pouvant être actionné par la face avant et déclenchant un contact électrique, avec un câble de connexion (6) connecté à l'élément de commutation (5) et muni d'une sortie de câble sur l'arrière, et avec des perçages (3) pour le passage de moyens de fixation, lesquels perçages (3) sont disposés dans des creux (4) du boîtier (2) qui sont formés sur la face avant du boîtier (2), **caractérisé en ce qu'**il est prévu un cadre de couverture (12) pouvant être emboîté sur la face avant du boîtier (2) de la partie fonctionnelle (1), qui est muni de perçages (14) du cadre de couverture pour le passage de moyens de fixation et de saillies d'enfichage (13), lesquelles saillies d'enfichage (13) peuvent être enfichées au moins en partie en correspondance de forme dans les creux (4) du boîtier (2) de la partie fonctionnelle (1) et les perçages (14) du cadre de couverture étant disposés dans des parties du cadre de couverture (20) emboîté qui dépassent du boîtier (2) de la partie fonctionnelle (1), et il est prévu une partie d'embase (8) qui est munie de perçages de partie d'embase (9) qui sont alignés, lorsque la partie d'embase (8) est posée sur la face arrière du boîtier (2) de la partie fonctionnelle (1), avec les perçages (3) de la partie fonctionnelle (1) pour le passage des moyens de fixation, la partie d'embase (8) comportant un logement central (10) pour le câble de connexion (6) de la partie fonctionnelle (1) et une rainure de guidage du câble (11) reliant le logement central (10) à une face latérale de la partie d'embase (8) pour une sortie latérale du câble de connexion (6), et la partie fonctionnelle (1) pouvant être combinée au choix avec le cadre de couverture (12) et/ou avec la partie d'embase (8).

2. Dispositif de commutateur selon la revendication 1, **caractérisé en ce que** le logement central (10) est réalisé comme une traversée à travers la partie d'embase (8).

3. Dispositif de commutateur selon la revendication 1 ou 2, **caractérisé en ce que**, lorsque la partie d'embase (8) est posée sur la face arrière du boîtier (2) de la partie fonctionnelle (1), ses dimensions extérieures perpendiculairement au sens de pose correspondent aux dimensions extérieures du boîtier (2) de la partie fonctionnelle (1).

4. Dispositif de commutateur selon l'une des revendications 1 à 3, **caractérisé en ce que** l'élément de commutation (5) est réalisé comme un bouton-poussoir avec une membrane piézoélectrique sensible à la pression.

5. Dispositif de commutateur selon l'une des revendications 1 à 4, **caractérisé en ce qu'**un témoin à DEL (7) indiquant l'état de contact du dispositif de commutateur est disposé sur la face avant du boîtier (2) et le cadre de couverture (12) présente une ouverture (15) qui est alignée sur le témoin à DEL (7) quand le cadre de couverture (12) est emboîté.
